# EUROPÄISCHE PATENTSCHRIFT

(11) **EP 3 833 707 B1**
(45) Veröffentlichungstag und Bekanntmachung des Hinweises auf die Patenterteilung: **27.07.2022**
(21) Anmeldenummer: 19750117.4
(22) Anmeldetag: 05.08.2019
(51) Int. Cl.: C08G 65/48, C08L 71/00

(54) **VERNETZUNG VON POLYARYLETHERKETONEN**
CROSSLINKING OF POLYARYLETHERKETONES
RÉTICULATION DE POLYARYLÉTHERCÉTONES

(30) Priorität: 09.08.2018 DE 102018119446
(43) Veröffentlichungstag der Anmeldung: 16.06.2021
(73) Patentinhaber: Freudenberg SE, 69469 Weinheim (DE)
(72) Erfinder: SCHAUBER, Thomas, 69469 Weinheim (DE); SUTTER, Marco, 69469 Weinheim (DE); ZELLER, Anke, 64665 Alsbach-Haehnlein (DE); TRUXIUS, Kira, 64285 Darmstadt (DE); KRAFFT, Christoph, 64668 Rimbach (DE); SCHMALZEL, Ivan, 67105 Schifferstadt (DE); SCHMITT, Michael, 69518 Abtsteinach (DE); NIKLAS, Mirco, 64658 Fürth (DE); BEHLE, Stefan, 69509 Moerlenbach (DE); WENZEL, Juergen, 69469 Weinheim (DE); HAVEMANN, Bernd, 69198 Schriesheim (DE)
(74) Vertreter: Kuhn, Daniela
(86) Internationale Anmeldenummer: PCT/EP2019/071035
(87) Internationale Veröffentlichungsnummer: WO 2020/030599

(56) Entgegenhaltungen:
- US-A1- 2010 022 718
- US-A1- 2011 139 466
- US-A1- 2015 219 990
- THOMPSON S A ET AL: "A NOVEL METHOD FOR CROSSLINKING POLYETHERETHERKETONE", JOURNAL OF APPLIED POLYMER SCIENCE, JOHN WILEY & SONS, INC, US, Bd. 36, Nr. 5, 20. August 1988 (1988-08-20), Seiten 1113-1120, XP000149412, ISSN: 0021-8995, DOI: 10.1002/APP.1988.070360512

## Beschreibung

Die Erfindung betrifft Verfahren zur Herstellung eines Formkörpers aus Polyaryletherketonen (PAEK) und einem Vernetzer. Die Erfindung betrifft auch Formkörper, die mit dem Verfahren erhältlich sind, und Dichtungsartikel.

### Stand der Technik

Polyaryletherketone (PAEK), wie Polyetheretherketone (PEEK), sind teilkristalline Hochleistungspolymere, die eine hohe Temperatur- und Medienbeständigkeit aufweisen. Sie bestehen aus alternierenden Keto-, Ether und Arylgruppen. Ein Vorteil der PAEK ist die thermoplastische Verarbeitbarkeit. Jedoch weisen Thermoplasten eine intrinsisch gegebene Grenze hinsichtlich der Temperaturbeständigkeit auf. Um die Temperaturbeständigkeit und die mechanische Stabilität der PAEK zu erhöhen, wurde vorgeschlagen, die Polymerketten zu vernetzen. Zur Vernetzung werden im Stand der Technik Verfahren eingesetzt, bei denen die PAEK mit Diaminen vernetzt werden. Dabei werden Iminbindungen (Schiffsche Basen) gebildet, die den vernetzten Polymeren eine höhere Stabilität verleihen können. Nachteilig ist dabei, dass solche vernetzten Polymere nicht fließfähig sind. Sie können daher nicht ohne Weiteres aus einer Schmelze des Polymers thermoplastisch verarbeitet werden.

Das Verfahren zur chemischen Vernetzung von Polyetheretherketonen (PEEK) mit Diaminen wurde erstmals von Thompson und Farris (Journal of Applied Polymer Science, 1988, Vol. 36, 1113-1120) beschrieben. Dabei wird Polyetheretherketon zunächst in Diphenylsulfon als Lösungsmittel durch Anbindung von para-Phenylendiamin modifiziert. Anschließend muss das Lösungsmittel durch Trocknen und weiteres Reinigen abgetrennt werden. Problematisch ist, dass bei dem beschriebenen Verfahren, und dabei auch beim kovalenten Anbinden, bereits Quervernetzungen gebildet werden. Dabei steigen die Glasübergangstemperatur und die Temperaturbeständigkeit an und die thermoplastische Verarbeitbarkeit geht verloren. Die erhaltene Polymermasse wird daher nicht thermoplastisch aus der Schmelze, sondern durch Heißpressen vernetzt.

Yurchenko et al. (2010, Polymer 51, 14-1220) haben das von Thompson und Farris beschriebene Verfahren und die Produkte genauer untersucht. Sie beschreiben eine analoge Reaktion von PEEK und Phenylendiamin in Diphenylsulfon als Lösungsmittel, bei der das PAEK modifiziert und nach Abtrennen des Lösungsmittels und Reinigung durch Heißpressen vernetzt und charakterisiert wird. Eine thermoplastische Verarbeitung wird ebenfalls nicht beschrieben. Die Untersuchung zeigt, dass die Produkte eine höhere Stabilität als unvernetztes PEEK aufweisen, die jedoch noch verbesserungsbedürftig ist.

Die WO 2010/011725 A2 beschreibt eine Vielzahl aminischer Vernetzer, um PAEK zu vernetzen. Das Dokument enthält jedoch nur ein einziges Synthesebeispiel, das die Vernetzung von PAEK mit Diphenylamin gemäß der oben zitierten Literatur beschreibt, bei der zunächst eine Reaktion in Diphenylsulfon als Lösungsmittel stattfindet.

Verfahren zur Vernetzung von PAEK mit nicht aminischen Vernetzern werden in US 6,887,408 B2 beschrieben.

Um PAEK zu vernetzen, wurde im Stand der Technik auch vorgeschlagen, die Polymere selbst mit vernetzbaren Aminogruppen zu funktionalisieren. Solche Verfahren werden beispielsweise in US 2017/0107323 A1 beschrieben. Dabei ist nachteilig, dass die Funktionalisierung der PAEK mit Aminogruppen relative aufwändig ist. Zudem lässt sich die Vernetzung von funktionalisiertem PAEK nicht so einfach und variabel kontrollieren wie mit einem niedermolekularen Vernetzer.

Die im Stand der Technik beschriebenen Verfahren zur Vernetzung von PAEK mit Diaminen mit niedermolekularen Vernetzern werden in Gegenwart von einem hohen Anteil von Lösungsmittel durchgeführt, wobei die Herstellung der Formkörper durch Heißpressen (compression molding) erfolgt. Die Produkte sind temperaturstabiler als vergleichbare nicht vernetzte PAEK. Nachteilig ist jedoch, dass auf diese Weise vernetztes PAEK eine relativ geringe Steifigkeit aufweisen, da die Kristallinität des PAEK beim Auflösen der Polymere in Lösungsmittel verloren geht. Bei der weiteren Verarbeitung kann die Kristallinität wegen der intrinsischen sterischen Hinderung der Ketten durch die Vernetzungsstellen allenfalls zu einem geringen Anteil wiedergewonnen werden. Außerdem ist nachteilig, dass die Verfahren insgesamt sehr aufwändig sind, weil sie auch wegen der Entfernung des Lösungsmittels eine Vielzahl von Arbeitsschritten erfordern. Ein weiterer Nachteil ist, dass die Formkörper durch Heißpressen hergestellt werden, wodurch die Anwendungsmöglichkeiten im Vergleich zur thermoplastischen Verarbeitung limitiert sind. Heißpressen und vergleichbare Verfahren werden mit nicht fließfähigen Materialien durchgeführt, die nicht in thermoplastische Schmelzen überführbar sind. Dadurch ist die Verformbarkeit beschränkt und es lassen sich keine dünnwandigen oder komplexen Formkörper herstellen. Aus diesen Gründen sind solche Verfahren auch nur sehr begrenzt automatisierbar. Daher kann auf Basis der bekannten lösungsmittelbasierten Verfahren keine effiziente und kostengünstige industrielle Produktion erfolgen.

In der WO 2010/011725 A2 wird auch theoretisch vorgeschlagen, vernetzte PAEK durch Extrudieren herzustellen. Es fehlt jedoch ein Beleg, dass die PAEK mit niedermolekularen Vernetzern extrudierbar sind, geschweige denn, dass dabei Produkte mit vorteilhaften Eigenschaften erhalten werden können. Dafür besteht auch keine angemessene Erfolgserwartung. Zum einen ist problematisch, dass bei den erforderlichen hohen Schmelztemperaturen, bei denen die Komponenten vermischt und verarbeitet werden müssen, bereits die Vernetzung einsetzt. Zum anderen ist nicht zu erwarten, dass PAEK in Abwesenheit eines Lösungsmittels mit solchen aminischen Vernetzern mischbar und verarbeitbar sind. In der Praxis werden bei der Einarbeitung von niedermolekularen Komponenten in Polymere häufig Entmischungsprozesse beobachtet. Die homogene Verteilung des Vernetzers in dem Polymer ist aber für den Erhalt eines stabilen Produkts unbedingt notwendig.

Ein weiterer Nachteil ist, dass der Umgang mit flüchtigen Diaminen bei hoher Temperatur mit erheblichen Gefährdungen für den Anwender und einer hohen Umweltbelastung einhergeht.

Es wäre daher wünschenswert, Verfahren und Formkörper bereitzustellen, welche die beschriebenen Nachteile überwinden.

### Aufgabe der Erfindung

Der Erfindung liegt die Aufgabe zugrunde, Verfahren und Produkte bereitzustellen, welche die oben beschriebenen Nachteile überwinden.

Insbesondere sollen Werkstoffe auf Basis von PAEK bereitgestellt werden, die eine hohe Stabilität und eine gute Verarbeitbarkeit aufweisen. Die Werkstoffe sollen insbesondere eine hohe Temperaturbeständigkeit und bei hohen Temperaturen eine hohe Steifigkeit (Modul) aufweisen. Außerdem sollen sie eine gute Beständigkeit gegenüber Chemikalien und eine geringe Brennbarkeit aufweisen. Außerdem sollen die Materialien eine geringe Kriechneigung und ein gummielastisches Verhalten im Hochtemperaturbereich aufweisen.

Insbesondere liegt der Erfindung die Aufgabe zugrunde, Materialien bereitzustellen, die eine hohe Stabilität aufweisen, aber dennoch gut verarbeitbar sind. Die Materialien sollen dabei auf einfache Weise effizient und kostengünstig herstellbar sein. Dabei wäre es insbesondere vorteilhaft, wenn die Materialien thermoplastisch verarbeitbar sind. Dabei sollen insbesondere nicht effiziente Verfahren, wie Heißpressen, vermieden werden.

Die Verfahren sollen auch möglichst umweltschonend und ohne Gefährdung der Anwender durchführbar sein.

### Offenbarung der Erfindung

Überraschenderweise wird die der Erfindung zugrunde liegende Aufgabe gelöst durch Verfahren, Formkörper und Dichtungsartikel gemäß den Patentansprüchen.

Gegenstand der Erfindung ist ein Verfahren zur Herstellung eines Polyaryletherketone (PAEK) enthaltenden, vernetzten Formkörpers, umfassend die Schritte
(a) Bereitstellen einer Mischung, enthaltend ein PAEK und einen Vernetzer,
(b) Herstellen eines Formkörpers aus der Mischung, und
(c) Thermisches Behandeln des Formkörpers bei einer Temperatur, bei der PAEK vernetzt wird, wodurch der vernetzte Formkörper erhalten wird, und
wobei der Vernetzer eine Di(aminophenyl)verbindung ist, bei der die beiden Aminophenylringe über eine aliphatische Gruppe, die einen carbocyclischen Rest aufweist, miteinander verbunden sind.

Polyetherketone (PEK) sind Polymere, die aus sich abwechselnden Keton (R-CO-R)- und Ethergruppen (R-O-R)- zusammengesetzt sind. Bei Polyaryletherketonen (PAEK) befindet sich zwischen den funktionellen Gruppen jeweils eine in (1,4)-Position verknüpfte Arylgruppe. Die PAEK weisen eine teilkristalline, starre Struktur auf, die den Materialien vergleichsweise hohe Glasübergangs- und Schmelztemperaturen verleiht.

Das Verfahren betrifft eine Vernetzungsreaktion, bei der die Polymerketten der PAEK kovalent und intermolekular miteinander verbunden werden. In Schritt (a) wird eine Mischung bereitgestellt, die das PAEK und den Vernetzer enthält. Dabei ist es bevorzugt, dass die Temperatur in Schritt (a) so eingestellt wird, dass noch keine wesentliche Reaktion zwischen dem PAEK und dem Vernetzer stattfindet. Dabei ist von Vorteil, dass die aminische Vernetzung von PAEK mit den erfindungsgemäß beschriebenen Vernetzern erst bei höheren Temperaturen einsetzt. Ein kovalentes Anbinden des Vernetzers an das PAEK, wie es im Stand der Technik beschrieben wird, ist bei dem einfachen erfindungsgemäßen Verfahren nicht erforderlich.

In Schritt (b) wird aus der Mischung ein Formkörper hergestellt. Der Schritt (b) des Herstellens des Formkörpers umfasst dabei sämtliche Maßnahmen, durch welche die Mischung in die dreidimensionale Form gebracht wird, die im ausgehärteten, vernetzten Zustand beibehalten wird. Vorzugsweise erfolgt das Herstellen des Formkörpers mittels thermoplastischer Formgebungsverfahren. Dabei ist es bevorzugt, dass die Herstellung des Formkörpers vor und/oder während des Vernetzens erfolgt. Besonders bevorzugt erfolgt die Formgebung vor Schritt (c), weil die Mischung vor dem Vernetzen in vorteilhafter Weise thermoplastisch verarbeitbar und formbar ist, insbesondere durch Heißpressen, Extrudieren und/oder Spritzgießen.

Schritt (c) umfasst das thermische Behandeln des Formkörpers bei einer Temperatur, bei der PAEK vernetzt wird, wodurch der vernetzte Formkörper erhalten wird.

Bei der Vernetzung erfolgt die Ausbildung von zwei Iminbindungen zwischen zwei Ketogruppen der PAEK-Ketten und den zwei Aminogruppen des Vernetzers. Die entstehende Brücke in Form eines Imins wird auch als Schiff'sche Base bezeichnet, da der Iminstickstoff kein Wasserstoffatom trägt, sondern mit einem organischen Molekül verbunden ist. Die Vernetzung erfolgt dabei möglichst vollständig, so dass möglichst alle Aminogruppen des eingesetzten Diamins mit den Carbonylgruppen des PAEK reagieren. Vorteilhaft an einer vollständigen Vernetzung ist eine erhöhte Wärmeformbeständigkeit und eine erhöhte Steifigkeit (Modul). Nichtsdestotrotz soll auch eine lediglich teilweise Vernetzung von dem Begriff "vernetzt" umfasst sein. Eine lediglich teilweise Vernetzung kann dann vorliegen, wenn nicht ausreichend viel Diamin für eine vollständige Einbindung aller PAEK-Ketten in das Netzwerk eingesetzt wurde. In diesem Fall besitzt das Material in der Regel eine höhere Bruchdehnung, als der vollständig vernetzte Werkstoff. Die Iminbindungen verleihen dem Formkörper eine hohe Stabilität. Erfindungsgemäß bevorzugt ist der Formkörper ein Formkörper auf Basis von PAEK. Dabei bedeutet "auf Basis von PAEK", dass das PAEK die wesentliche strukturgebende Polymerkomponente des Formkörpers ist. In einer Ausführungsform ist bevorzugt, dass das PAEK die einzige Polymerkomponente des Formkörpers ist. In einer weiteren Ausführungsform liegt das PAEK im Gemisch mit weiteren Polymeren, insbesondere thermoplastischen Polymeren, vor. Bevorzugte weitere Polymere sind Polyphenylensulfid (PPS), Polyamidimid (PAI), Polyphthalamid (PPA), teilaromatische Polyamide, thermoplastisches Polyimid (TPI), flüssigkristalline Polyester (LCP). Bevorzugte Masseverhältnisse zwischen PAEK und weiteren Polymeren, insbesondere thermoplastischen weiteren Polymeren sind dabei 1:1 bis 100:1, vorzugsweise 5:1 bis 100:1, besonders bevorzugt 10:1 bis 100:1. Ferner kann der Formkörper Füllstoffe wie beispielsweise Fasern und/oder übliche Additive enthalten, wie Verarbeitungshilfen, und/oder funktionale Komponenten. Das vernetzte PAEK bildet dabei eine Matrix, in der gegebenenfalls vorhandenen Additive gleichmäßig verteilt sind.

Der Vernetzer ist eine Di(aminophenyl)-Verbindung. Solche Verbindungen weisen zwei miteinander verbundene Aminophenyl-Ringe auf. Die Verbindungen sind daher primäre Diamine. Dabei weist jeder Phenylring in einer Ausführungsform der Erfindung nur eine einzige Aminogruppe auf. Ebenfalls denkbar ist jedoch, dass die Phenylringe unabhängig voneinander zwei oder drei Aminogruppen aufweisen. Die Verbindungen sind niedermolekular und keine Polymere. Die Phenylringe können neben den Aminogruppen weitere Substituenten aufweisen, wie Alkyl- oder Halogengruppen. Die beiden Aminophenylringe sind über eine aliphatische Gruppe miteinander verbunden. Aliphatische Gruppen bestehen nur aus Kohlenstoff und Wasserstoff und sind nicht aromatisch. Die Vernetzer weisen abgesehen von den beiden Phenylringen bevorzugt keine weiteren Doppel- oder Dreifachbindungen auf. Die aliphatische Gruppe weist einen carbocyclischen Rest auf. Carbocyclische Reste sind Kohlenwasserstoffringe, die dabei beispielsweise 4 bis 7 Kohlenstoffatome aufweisen können, bevorzugt 5 oder 6 Kohlenstoffatome. Der carbocyclische Rest kann dabei Doppelbindungen der Phenylringe umfassen. Bevorzugt weist die carbocyclische Gruppe nur einen einzigen aliphatischen Kohlenwasserstoffring auf. Bevorzugt weist die aliphatische Gruppe insgesamt 5 bis 15 Kohlenstoffatome auf, insbesondere 6 bis 8 Kohlenstoffatome. Wegen der aliphatischen Gruppe zwischen den carboyclischen Resten sind die beiden Phenylringe nicht konjugiert.

Erfindungsgemäß wurde überraschenderweise gefunden, dass PAEK, das mit solchen Di(aminophenyl)-Verbindungen vernetzt wird, besonders vorteilhafte Eigenschaften aufweist. Insbesondere weist das vernetzte PAEK eine besonders hohe thermische Stabilität und mechanische Stabilität, und dabei insbesondere eine besonders hohe Glasübergangstemperatur und Steifigkeit auf. Ohne an eine Theorie gebunden zu sein wird vermutet, dass der carbocyclische Rest die Ausbildung eines besonders starren, teilkristallinen Polymerstruktur unterstützen kann, die dem Produkt eine hohe Stabilität verleiht. Dabei wird auch angenommen, dass über den Vernetzer mit dem carbocyclischen Rest eine vorteilhafte und regelmäßige Beabstandung der PAEK-Polymerketten eingestellt werden kann. Insgesamt scheint die kristalline Struktur des PAEK durch solche Vernetzer wenig beeinträchtigt oder sogar in vorteilhafter Weise unterstützt zu werden.

In einer bevorzugten Ausführungsform ist der Vernetzer eine anellierte Verbindung, bei der nur einer der beiden Phenylringe mit dem carbocyclischen Rest anelliert ist. Anellierung (Kondensation) bezeichnet die Anfügung eines weiteren Ringes an einen Ring eines cyclischen Moleküls. Die zwei anellierten Ringe teilen sich zwei Kohlenstoffatome und damit eine C-C-Doppelbindung des Phenylrings. Die Verwendung solcher anellierter Vernetzer hat den Vorteil, dass eine besonders starre und regelmäßige Verbindung zwischen den PAEK-Ketten ausgebildet werden kann, wodurch eine besonders hohe Temperaturstabilität und Steifigkeit der Produkte erreicht werden kann.

Die Aminogruppen können grundsätzlich an beliebigen Positionen der Phenylgruppe vorhanden sein, also in *ortho-, meta-* oder para-Position in Bezug auf die aliphatische Verbindung der beiden Phenylringe. In der Ausführungsform, dass jede Phenylgruppe nur eine einzige Aminogruppe aufweist ist es bevorzugt, dass die beiden Aminogruppen möglichst weit voneinander beabstandet sind. Dies kann erreicht werden, wenn die beiden Aminogruppen an der para-Position in Bezug auf die aliphatische Verbindung und/oder an die 4- und 4'-Position der Phenylringe angehängt sind. In einer bevorzugten Ausführungsform ist daher die Diaminodiphenylverbindung eine 4,4'-Diaminodiphenylverbindung. Allgemein kann der Vorteil von möglichst weit voneinander beabstandeten Aminogruppen darin liegen, dass die Ausbildung unerwünschter intramolekularer Reaktionen, bei denen ein Vernetzer zwei Bindungen mit derselben PAEK-Polymerkette eingeht, verringert wird. Solche intramolekularen Reaktionen mit dem Vernetzer können die kristalline Struktur des PAEK stören, ohne vernetzungswirksam zu sein, und dadurch die Stabilität des Produkts reduzieren.

In einer bevorzugten Ausführungsform der Erfindung ist der Vernetzer eine asymmetrische Verbindung.

In einer bevorzugten Ausführungsform der Erfindung ist der Vernetzer eine Verbindung der allgemeinen Formel (I): 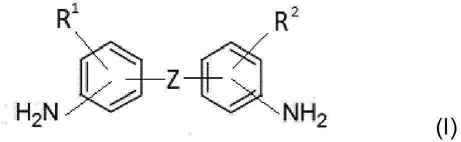 wobei R¹ und R² unabhängig voneinander ausgewählt sind aus H, substituiertem oder unsubstituiertem Alkyl mit 1 bis 20 C-Atomen, insbesondere mit 1 bis 4 C-Atomen, insbesondere Methyl oder Ethyl, substituiertem oder unsubstituiertem Aryl mit 5 bis 12 C-Atomen, F und Cl, und wobei Z die aliphatische Gruppe ist, die einen carbocyclischen Rest aufweist. Dabei kann jeder Phenylring einen, zwei oder drei Reste R¹ oder R² aufweisen, die unabhängig voneinander ausgewählt sind. Bevorzugt weist ein Phenylring nur einen Rest R¹ und/oder R² auf. Besonders bevorzugt sind die Reste R¹ und R² jeweils H. Vernetzer ohne zusätzliche Reste R¹ und R² sind relativ gut verfügbar und können zu hochstabilen vernetzten PAEK verarbeitet werden.

Der Rest Z kann mit jedem Phenylrest über zwei oder über eine Bindung verbunden sein. Bevorzugt ist der Rest Z mit einem Phenylrest über zwei Bindungen und mit dem zweiten Phenylrest über eine Bindung verbunden.

In einer bevorzugten Ausführungsform ist der Vernetzer eine Verbindung der allgemeinen Formel (II): 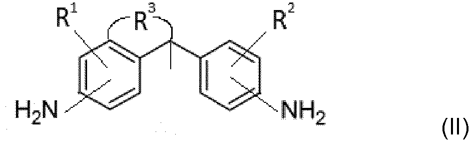 wobei R¹ und R² unabhängig voneinander ausgewählt sind aus H, substituiertem oder unsubstituiertem Alkyl mit 1 bis 20 C-Atomen, insbesondere mit 1 bis 4 C-Atomen, insbesondere Methyl oder Ethyl, substituiertem oder unsubstituiertem Aryl mit 5 bis 12 C-Atomen, F und Cl, und
wobei R³ ein carbocyclischer Rest ist, der 2 bis 3 C-Ringatome aufweist, und der mit mindestens einer Alkylgruppe mit 1 bis 4 C-Atomen, insbesondere Methyl oder Ethyl, substituiert sein kann. Besonders bevorzugt sind die Reste R¹ und R² jeweils H. Der carbocyclische Rest R³ ist also ein Pentyl- oder Hexylrest. Solche Vernetzer haben den Vorteil, dass eine besonders gute Kombination von Temperaturstabilität und mechanischer Stabilität der vernetzten PAEK erhalten werden kann.

In einer bevorzugten Ausführungsform ist der Vernetzer eine Verbindung der allgemeinen Formel (III): 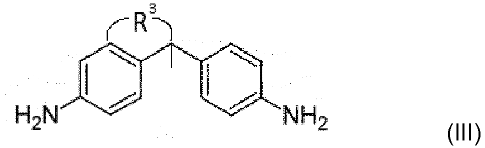 wobei R³ ausgewählt ist, wie oben angegeben. Solche Vernetzer haben den Vorteil, dass eine besonders gute Kombination von Temperaturstabilität und mechanischer Stabilität der vernetzten PAEK erhalten werden kann.

In einer bevorzugten Ausführungsform weist der Vernetzer die Formel (IV) auf:

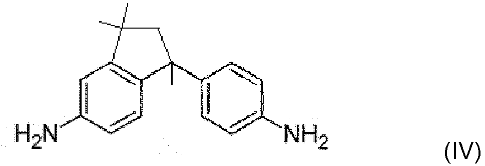

Die Verbindung führte bei den durchgeführten Versuchen zu einer besonders vorteilhaften Kombination von Temperaturstabilität und mechanischer Stabilität der vernetzten PAEK. Die chemische Bezeichnung ist 1-(4-Aminophenyl)-1,3,3-trimethyl-indan-5-amin (CAS Nr. 54628-89-6).

In einer weiteren bevorzugten Ausführungsform weist der Vernetzer die Formel (V) auf:

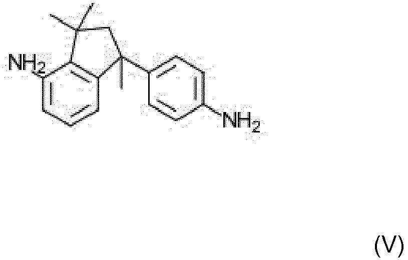

Die Verbindung führt bei den durchgeführten Versuchen ebenfalls zu einer besonders vorteilhaften Kombination von Temperaturstabilität und mechanischer Stabilität der vernetzten PAEK. Die chemische Bezeichnung ist 1-(4-Aminophenyl)-1,3,3-trimethyl-indan-6-amin.

In einer weiteren bevorzugten Ausführungsform weist der Vernetzer ein Gemisch aus Verbindungen der Formel: 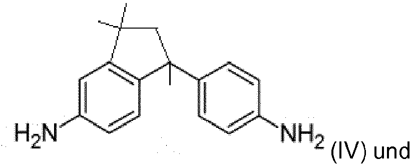 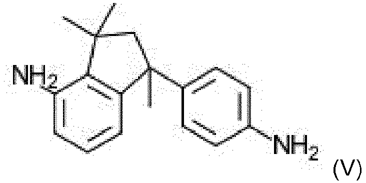 auf.

Dieser Vernetzer führt bei den durchgeführten Versuchen ebenfalls zu einer besonders vorteilhaften Kombination von Temperaturstabilität und mechanischer Stabilität der vernetzten PAEK.

In einer weiteren bevorzugten Ausführungsform weist der Vernetzer die Formel (VI) auf:

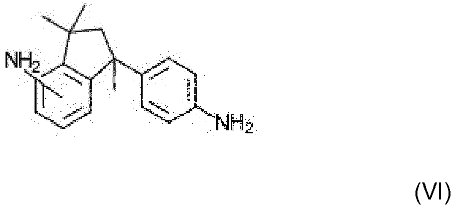

Dieser Vernetzer führt bei den durchgeführten Versuchen ebenfalls zu einer besonders vorteilhaften Kombination von Temperaturstabilität und mechanischer Stabilität der vernetzten PAEK. Die chemische Bezeichnung ist 1-(4-Aminophenyl)-1,3,3-trimethyl-indan-amin (CAS Nr. 68170-20-7). Hier kann die Amino-Gruppe am aromatischen Ring des Indans an allen Positionen vorkommen. Ebenfalls umfasst sind Gemische von 1-(4-Aminophenyl)-1,3,3-trimethyl-indan-aminen, in denen die Amino-Gruppe am aromatischen Ring des Indans an verschiedenen Positionen sitzt.

Es ist erfindungsgemäß bevorzugt, einen einzigen konkreten Vernetzer einzusetzen, um möglichst gleichförmige Materialeigenschaften zu erhalten. Es ist jedoch auch möglich, Gemische von zwei oder mehr Vernetzern einzusetzen.

Die Menge des Vernetzers wird im Hinblick auf den gewünschten Vernetzungsgrad eingestellt. Dabei kann der Anteil des Vernetzers in Bezug auf das PAEK 0,05 Gew.-% bis 15 Gew.-% sein, insbesondere 0,1 Gew.-% bis 5 Gew.-%. In einer bevorzugten Ausführungsform ist der Anteil des Vernetzers 0,1 bis 1,5 Gew.-%. Es wurde gefunden, dass die Stabilität des Produktes mit einem solchen Vernetzeranteil besonders vorteilhaft sein kann. Insbesondere kann bei einer Einstellung der Vernetzermenge in diesem Bereich eine signifikante Verbesserung der Bruchdehnung erreicht werden.

In einer bevorzugten Ausführungsform weist der Vernetzer einen Siedepunkt auf, der größer 300°C, insbesondere größer 350°C oder größer 400°C ist. Dies ist vorteilhaft, weil solche Vernetzer bei den erforderlichen hohen Vernetzungstemperaturen nur einen relativ geringen Dampfdruck aufweisen. Bevorzugt ist der Siedepunkt des Vernetzers zwischen 300°C und 500°C, insbesondere zwischen 350°C und 500°C. Der Schmelzpunkt des Vernetzers liegt vorteilhafterweise unterhalb des Schmelzpunktes des PAEK. Dadurch wird eine gute Verarbeitbarkeit und eine geringe Gefährdung der Anwender erreicht.

Als Polymerkomponente können grundsätzlich beliebige Polyaryletherketone eingesetzt werden. Polyaryletherketone sind gekennzeichnet durch lineare Polymerketten aus Aryl-, Ether- und Ketogruppen. Die Verbindungen dieser Stoffklasse unterscheiden sich durch die unterschiedliche Anordnung dieser Gruppen und ihr Verhältnis im Molekül. Das PAEK kann dabei beispielsweise ein Polyetheretherketon (PEEK), ein Poly(etherketonketon) (PEKK), ein Poly(etheretheretherketon) (PEEEK) oder ein Poly(etheretherketonketon) (PEEKK) sein. Die Verbindungen dieser Stoffklasse weisen Ketogruppen auf, die unter Ausbildung von Iminbindungen verbunden werden können. Dabei können auch Gemische verschiedener Polyaryletherketone eingesetzt werden. Es ist bevorzugt, ein einziges PAEK einzusetzen, weil dadurch eine hohe Kristallinität und damit verbundene Temperaturstabilität erreicht werden kann.

In einer bevorzugten Ausführungsform ist das Polyaryletherketon (PAEK) ein Polyetheretherketon (PEEK, CAS-Nummer 29658-26-2). Besonders bevorzugt ist das Polyaryletherketon (PAEK) ein Polyetheretherketon PEEK mit einem Schmelzbereich von 335°C bis 345°C. Es wurde gefunden, dass PEEK, das erfindungsgemäß vernetzt wird, besonders vorteilhafte Eigenschaften hinsichtlich Temperatur- und mechanischer Stabilität aufweist.

Bevorzugt weist das Polyaryletherketon (PAEK) bei 380°C eine Schmelzviskosität im Bereich von 5 cm³/10 min bis 250 cm³/10 min, insbesondere von 50 cm³/10 min bis 200 cm³/10 min auf. Die Messung erfolgt gemäß DIN ISO 1130, wobei das Material bei 380°C geschmolzen und mit einem 5 kg Stempel belastet wird, wonach die Fließfähigkeit bestimmt wird. Kommerziell erhältliche PAEK, insbesondere PEEK-Varianten sind in der Regel geeignet. Die Schmelzviskosität korreliert im Allgemeinen mit dem Molekulargewicht der Polymerketten. Es wurde gefunden, dass eine solche Schmelzviskosität vorteilhaft ist, weil erfindungsgemäß sowohl eine gute thermoplastische Verarbeitbarkeit und Mischbarkeit erreicht wird, als auch ein homogenes Produkt mit hoher Stabilität, und dabei insbesondere hoher Steifigkeit, erhalten werden kann. Besonders ist es dabei bevorzugt, ein solches PAEK, insbesondere PEEK mit einer wie oben genannten Schmelzviskosität und den Vernetzer in einer Menge von 0,1 Gew.-% bis 5 Gew.-%, insbesondere zwischen 0,1 Gew.-% bis 1,5 Gew.-%, bezogen auf das PAEK, insbesondere PEEK, einzusetzen. Bei einem solchen Verhältnis und Eigenschaften der Ausgangsmaterialien ist eine besonders gute Verarbeitbarkeit und Temperaturstabilität der Produkte erreichbar. Insbesondere ist die Steifigkeit besonders hoch, die durch einen hohen Zugmodul gekennzeichnet ist. Weiterhin kann ein solches PAEK, insbesondere PEEK bei einer Temperatur verarbeitet werden, die noch ein thermoplastisches Mischen erlaubt, ohne dass während dieses Prozesses die Vernetzungsreaktion zu schnell voranschreitet. Dadurch wird eine Formmasse erhalten, die sehr gut thermoplastisch weiterverarbeitet werden kann.

Die in Schritt (a) bereitgestellte Mischung kann durch übliche Compoundierungsverfahren hergestellt werden. Bei solchen Verfahren, wird die Mischung, vorzugsweise als Schmelze intensiv vermischt, beispielsweise in einer Schnecke. Die Temperaturen in der Mischvorrichtung werden vorzugsweise so eingestellt, dass die Mischung gut verarbeitbar ist und eine zum Compoundieren geeignete Viskosität aufweist. Beim Compoundieren kann ein Zwischenprodukt erhalten werden, beispielsweise ein Granulat.

Die Mischung wird dabei bevorzugt bei einer Temperatur hergestellt, bei der noch keine oder keine wesentliche Vernetzung stattfindet. Erfindungsgemäß ist es nicht erforderlich, dass wie bei den im Stand der Technik beschriebenen Verfahren bereits eine kovalente Anbindung der Vernetzer an das PAEK über aminische Bindungen erfolgt. Dies ist vorteilhaft, weil erfindungsgemäß ein solcher zusätzlicher Reaktionsschritt entfallen kann, der genau kontrolliert werden müsste, um eine unerwünschte Weiterreaktion der Intermediate und eine daraus resultierende verfrühte Vernetzung zu verhindern.

Bei dem Herstellen der Mischung erfolgt eine intensive Durchmischung durch geeignete Mittel, wie Rühr- oder Kneteinrichtungen, um eine gleichmäßige Verteilung des Vernetzers in dem Polymer zu erreichen. Dies ist von hoher Bedeutung, um gleichförmige Materialeigenschaften hinsichtlich der Stabilität zu erhalten. In einer bevorzugten Ausführungsform ist das Herstellen ein Schritt des Verfahrens, das vor Schritt (a) in einem Schritt (a0) erfolgt. Bevorzugt wird die vernetzbare Mischung nach dem Herstellen ohne weitere Zwischenschritte, welche die Zusammensetzung verändern, in Schritt (b) weiterverarbeitet.

In einer besonders bevorzugten Ausführungsform der Erfindung enthält die Mischung kein Lösungsmittel. Erfindungsgemäß wurde überraschenderweise gefunden, dass Mischungen des PAEK und des Vernetzers ohne Verwendung eines Lösungsmittels verarbeitet werden können, wobei eine innige Durchmischung stattfindet.

Bevorzugt wird die Mischung auf eine Temperatur erwärmt, bei der sie in flüssiger Form vorliegt. Um eine homogene Mischung zu erhalten, ist es dabei bevorzugt, Temperatur und Verweilzeit so zu wählen, dass dabei keine signifikante Vernetzung erfolgt.

In einer bevorzugten Ausführungsform wird der Vernetzer kontinuierlich zu dem PAEK gegeben. Dabei können die Komponenten in flüssiger oder in fester Form vorliegen. Auf diese Weise kann eine besonders gleichförmige Mischung erhalten werden. Die Zugabe des Vernetzers erfolgt dabei bevorzugt unter innigem Durchmischen, beispielsweise unter Rühren und/oder Kneten. In einer bevorzugten Ausführungsform wird der Vernetzer in Form eines Konzentrates zugeführt. Dies hat den Vorteil, dass der Vernetzer bessert dosiert werden kann, wodurch die Gleichförmigkeit der Mischung verbessert werden kann. Insgesamt kann bei kontinuierlicher Zugabe des Vernetzers eine besonders homogene Mischung erhalten werden, so dass eine besonders regelmäßige Vernetzung erreicht wird. Dadurch kann vermieden werden, dass Bereiche starker oder geringer Vernetzung entstehen, die zu Beschädigungen des Produktes bei thermischer oder mechanischer Belastung führen können. Auf diese Weise können besonders gute Eigenschaften hinsichtlich der Temperaturstabilität und mechanischen Stabilität erreicht werden.

In Schritt (b) erfolgt das Herstellen eines Formkörpers aus der Mischung. In einer bevorzugten Ausführungsform erfolgt die Herstellung des Formkörpers in Schritt (b) durch thermoplastisches Umformen. Dies bedeutet, dass die Mischung in nicht und/oder zumindest nicht signifikant vernetztem Zustand aus der Schmelze geformt werden kann, da andernfalls das thermoplastische Verarbeiten nicht mehr möglich wäre. Wenn zu viele Vernetzungsstellen vorhanden sind, ist das PAEK-Zwischenprodukt nicht mehr fließfähig und nicht mehr ohne weiteres thermoplastisch formbar. Die Mischung sollte vor der Formgebung nur über einen kurzen Zeitraum den hohen Verarbeitungstemperaturen ausgesetzt werden. Daher wird das thermoplastische Verarbeiten bevorzugt so durchgeführt, dass die Verweilzeit der Mischung in der Vorrichtung möglichst gering ist. Dabei ist es bevorzugt, dass das Verarbeiten so durchgeführt wird, dass der wesentliche Teil der Vernetzungsreaktion, und dabei beispielsweise mehr als 80%, mehr als 90% oder mehr als 95% der Vernetzungen erst nach der Formgebung, d.h. in Schritt (c) erfolgt.

In einer bevorzugten Ausführungsform wird die Mischung in Schritt (b) durch Extrudieren, Heißpressen und/oder Spritzgießen verarbeitet und dabei umgeformt. Diese Verfahren eignen sich in besonderem Maße zur einfachen und effizienten Verarbeitung von thermoplastischen Polymerzusammensetzungen.

Das Extrudieren kann dabei nach bekannten Verfahren erfolgen. Beim Extrudieren (Extrusion) werden feste bis dickflüssige härtbare Massen unter Druck kontinuierlich aus einer formgebenden Öffnung (auch als Düse, Matrize oder Mundstück bezeichnet) herausgepresst. Dabei entstehen Körper mit dem Querschnitt der Öffnung, Extrudat genannt, in theoretisch beliebiger Länge. Bevorzugt erfolgt das Extrudieren bei einer Temperatur von mindestens 320°C, bevorzugt mindestens 350°C; bevorzugt zwischen 320°C und 400°C, und insbesondere zwischen 350°C und 390°C.

Das Heißpressen ist ein Verfahren, bei dem die Formmasse in die zuvor aufgeheizte Kavität eingebracht wird. Anschließend wird die Kavität unter Einsatz eines Druckkolbens geschlossen. Durch den Druck erlangt die Formmasse die vom Werkzeug vorgegebene Form. Bevorzugt erfolgt das Heißpressen bei einer Temperatur von mindestens 300°C, bevorzugt mindestens 350°C; bevorzugt zwischen 320°C und 400°C, und insbesondere zwischen 350°C und 400°C.

Das Spritzgießen (oft auch als Spritzguss oder Spritzgussverfahren bezeichnet) ist ein Formgebungsverfahren, das in der Kunststoffverarbeitung eingesetzt wird. Dabei wird der Kunststoff mit einer Spritzgießmaschine plastifiziert und unter Druck in eine Form, das Spritzgießwerkzeug, eingespritzt. Im Werkzeug geht der Werkstoff durch Abkühlung wieder in den festen Zustand über und wird nach dem Öffnen des Werkzeuges als Formkörper entnommen. Der Hohlraum (Kavität) des Werkzeuges bestimmt dabei die Form und die Oberflächenstruktur des Produktes.

Besonders bevorzugt erfolgt die Verarbeitung durch Extrudieren und anschließendes Spritzgießen. Die Mischung aus dem PAEK und dem Vernetzer wird bei diesen Verfahren geschmolzen, falls sie noch nicht in flüssiger Form vorliegt.

Die Mischung wird in Schritt (b) vorzugsweise in einen Extruder, eine Spritzgussmaschine oder eine Heißpresse eingeführt, bei hohen Temperaturen, beispielsweise im Bereich von 300°C bis 400°C, geschmolzen, und in eine gewünschte Form gebracht.

In Schritt (c) erfolgt ein thermisches Behandeln des Formkörpers bei einer Temperatur, bei der PAEK vernetzt wird, wodurch der vernetzte Formkörper erhalten wird. Hierdurch kann das PAEK intermolekular mit dem Vernetzer vernetzt werden. Die Temperatur bei Schritt (c) kann relativ hoch eingestellt werden, da die erfindungsgemäß einsetzbaren Vernetzer relativ hohe Schmelz- und Siedepunkte aufweisen. Dies ist vorteilhaft, weil solche Vernetzungsreaktionen im Allgemeinen bei hoher Temperatur begünstigt sind. Vorzugsweise liegt die Temperatur jedoch unterhalb des Schmelzbereiches von PAEK.

Überraschenderweise zeigte sich, dass im erfindungsgemäßen System die Vernetzungsreaktionen bereits unterhalb des Schmelzbereichs des Polymers und des Formkörpers stattfinden. Dies war unerwartet, da im Allgemeinen angenommen wird, dass Vernetzungsreaktionen erst bei Temperaturen oberhalb des Schmelzbereichs des Polymers und des Formkörpers stattfinden.

Im Stand der Technik wird ferner angenommen, dass solche Vernetzungsreaktionen relativ zügig innerhalb von Minuten oder wenigen Stunden erfolgen. Erfindungsgemäß wurde jedoch gefunden, dass das vernetzte PAEK besonders vorteilhafte Eigenschaften aufweisen kann, wenn die Erwärmung des Formkörpers im Schritt (c) über einen längeren Zeitraum, vorzugsweise von mindestens 6 Stunden, beispielsweise von 6 Stunden bis 30 Tage durchgeführt wird. Es wurde gefunden, dass die thermische Stabilität und die mechanische Stabilität durch eine solche thermische Behandlung wesentlich verbessert werden können.

Insbesondere wurde gefunden, dass durch die thermische Behandlung die Steifigkeit der Proben bei erhöhten Temperaturen verbessert werden kann. Dabei wurde beobachtet, dass eine thermische Behandlung für eine bestimmte Dauer die Steifigkeit deutlich verbessern kann, wobei anschließend eine Sättigung eintreten kann, so dass die Steifigkeit bei weiterer thermischer Nachbehandlung nicht oder nur unwesentlich verbessert wird. Jedoch zeigt sich bei weiterer thermischer Nachbehandlung eine Verbesserung der Wärmeformbeständigkeit. Es wurde gefunden, dass die Wärmeformbeständigkeit auch bei längerer thermischer Nachbehandlung ansteigen kann, so dass auch nach 14 Tagen noch eine signifikante Verbesserung beobachtet werden kann.

In einer bevorzugten Ausführungsform wird der in Schritt (b) erhaltene Formkörper für mindestens 6 h, insbesondere für mehr als 2 Tage oder für mehr als 2.5 Tage einer thermischen Behandlung unterzogen. In einer bevorzugten Ausführungsform der Erfindung wird die thermische Behandlung über einen Zeitraum von 2 bis 30, insbesondere für 2.5 bis 20 Tage durchgeführt. Dies ist von Vorteil, weil die Homogenität der Produkte, und dadurch die thermische und mechanische Stabilität, verbessert werden kann. Bevorzugt erfolgt die thermische Behandlung unter Ausschluss von Sauerstoff.

In einer bevorzugten Ausführungsform erfolgt die thermische Behandlung in Schritt (c) bei einer Temperatur von mindestens 250°C, bevorzugt mindestens 300°C. Bevorzugt ist die Temperatur in Schritt (c) zwischen 280°C und 415°C, besonders bevorzugt zwischen 300°C und 400°C. Bei solchen Temperaturen kann eine effiziente dreidimensionale Vernetzung hinreichend schnell ablaufen, ohne dass die thermoplastisch hergestellten Artikel beeinträchtigt werden, beispielsweise durch Zersetzung und/oder unerwünschte Deformation der Formkörper.

Die Formkörper werden nach der Vernetzung abgekühlt und können ihrer Verwendung zugeführt oder weiterverarbeitet werden.

Die Mischung und der Formkörper können übliche Additive enthalten. Beispielsweise können Additive in einer Menge von bis zu 20 Gew.-%, beispielsweise von 0.1 Gew.-% bis 20 Gew.-% und oder von 0.1 Gew.-% bis 18 Gew.-%, jeweils bezogen auf das Gesamtgewicht von Mischung und/oder Formkörper. Übliche Additive sind beispielsweise Farbstoffe, Verarbeitungshilfen.

Die Mischung und der Formkörper können übliche Füllstoffe wie insbesondere tribologisch aktive und/oder flexibilisierende Füllstoffe und/oder verstärkende Fasern enthalten. Beispielsweise können die Füllstoffe in einer Menge von bis zu 80 Gew.-%, beispielsweise von 0.1 Gew.-% bis 80 Gew.-% und/oder von 0.1 Gew.-% bis 60 Gew.-%, jeweils bezogen auf das Gesamtgewicht von Mischung und/oder Formkörper. Gegenstand der Erfindung ist auch ein Formkörper auf Basis von Polyaryletherketonen (PAEK), der eine vernetzte Matrix aus PAEK aufweist, wobei das PAEK mit einen Linker L vernetzt ist, der ein Diphenylrest ist, bei dem die beiden Phenylringe über eine aliphatische Gruppe, die einen carbocyclischen Rest aufweist, miteinander verbunden sind, wobei das PAEK über Iminbindungen mit den Phenylringen des Linkers verbunden ist.

Der Formkörper ist insbesondere durch die erfindungsgemäßen Verfahren erhältlich, die im Rahmen dieser Erfindung beschrieben werden. Der Formkörper weist bevorzugt die vorteilhaften Eigenschaften auf, die im Rahmen dieser Erfindung für die vernetzten PAEK beschrieben werden. Der Begriff Formkörper bezeichnet im Rahmen dieser Erfindung Produkte aus vernetztem PAEK, die eine definierte dreidimensionale Form aufweisen. Dabei ist es nicht erforderlich, dass der Formkörper ein definierter Gegenstand ist, sondern er kann beispielsweise auch eine Beschichtung sein. Der Formkörper kann aus dem vernetzten PAEK bestehen oder dieses enthalten, beispielsweise als Verbundmaterial oder Laminat.

Die erfindungsgemäßen Formkörper können vorteilhafte, erhöhte Steifigkeiten aufweisen, die durch einen hohen Zugmodul charakterisiert sind. Bevorzugt weist der Formkörper einen Zugmodul von mindestens 350 MPa, insbesondere von mindestens 400 MPa, und besonders bevorzugt von mindestens 450 MPa auf. Insbesondere ist der Zugmodul zwischen 350 MPa und 600 MPa oder zwischen 400 MPa und 550 MPa. Der Zugmodul wird bevorzugt bei 240°C nach DIN EN ISO527-2 bestimmt.

Es kann erwünscht sein, das Polymer in dem Formkörper nicht vollständig zu vernetzen, da die Bruchdehnung des Materials mit zunehmender Vernetzung abnehmen kann. Der Vernetzungsgrad wird daher bevorzugt im Hinblick auf die gewünschte Anwendung eingestellt, beispielsweise über den Anteil des Vernetzers und die Art und Dauer der thermischen Behandlung.

Dabei wird der Vernetzungsgrad bevorzugt nicht direkt gemessen, sondern es wird durch geeignete Prüfmethoden, wie beispielsweise einer Hochtemperatur-Zugprüfung bestimmt, ob der Formkörper die gewünschten Eigenschaften aufweist. Bei sehr hohen Temperaturen, bietet sich die Bestimmung des dynamischen Moduls an.

Die Formkörper sind insbesondere in technischen Gebieten verwendbar, in denen eine hohe Temperaturbeständigkeit und mechanische Stabilität, und dabei insbesondere eine hohe Steifigkeit, erforderlich sind. Sie sind insbesondere für Anwendungen als Dichtungsartikel insbesondere Dicht- und O-Ringe, Buchsen, Lager, Back-up-Ringe, Ventile, Anlaufscheiben, Schnapphaken, Rohre oder Leitungen, Kabel, Umhüllungen und Ummantelungen, Gehäuse eines elektrischen oder chemischen Anwendung oder als Bestandteil davon geeignet. Sie sind insbesondere für Verwendungen geeignet, bei denen eine hohe Chemikalienbeständigkeit und Beständigkeit gegen Abrieb erforderlich sind. Dies betrifft insbesondere Anwendungen in der Öl- und Gasförderung, der Luft- und Raumfahrttechnik und der chemischen Industrie, und dabei der Herstellung sicherheitsrelevanter Teile, und den Bereich Energiegewinnung und die Automobilindustrie. Ebenfalls denkbare Anwendungen sind Konnektoren und Isolatoren im Elektronikbereich, da die Vernetzung zu einem guten Isolationsvermögen führt.

Gegenstand der Erfindung ist auch ein Dichtungsartikel, bestehend aus oder enthaltend einen erfindungsgemäßen Formkörper. Der Dichtungsartikel kann für statische oder dynamische Anwendungen einsetzbar sein und dabei insbesondere für dynamische Anwendungen, bei denen er hohen mechanischen Belastungen ausgesetzt ist. Insbesondere ist der Dichtungsartikel für Dichtungsanwendungen geeignet, bei denen er mit Fluiden in Kontakt steht, wie Schmiermitteln, und bei denen er hohen Temperaturen ausgesetzt ist, beispielsweise oberhalb 150°C, und insbesondere im Bereich von 180°C bis 400°C.

Die erfindungsgemäßen Verfahren, Formkörper und Dichtungsartikel lösen die der Erfindung zugrundeliegende Aufgabe. Sie weisen eine hohe Temperaturbeständigkeit und hohe mechanische Stabilität in Verbindung mit einer guten Verarbeitbarkeit auf. Insbesondere weisen die Formkörper eine hohe Glasübergangstemperatur und eine hohe Steifigkeit insbesondere oberhalb der Glasübergangstemperatur auf. Die hohe Steifigkeit geht mit einem reduzierten Kriechverhalten bei hohen Temperaturen einher. Die verbesserte Temperaturbeständigkeit zeigt sich sowohl bei der Maximaltemperatur als auch der Dauergebrauchstemperatur, insbesondere im Bereich von 150°C bis 400°C. Die Formkörper zeigen auch ein vorteilhaftes gummielastisches Verhalten im Hochtemperaturbereich. Die Produkte zeigen dabei eine sehr gute Chemikalienbeständigkeit und eine reduzierte Brennbarkeit, da das Material wegen der Vernetzung nicht schmilzt und kein brennendes Material abtropft.

Außerdem können die erfindungsgemäßen Formkörper auf einfache und effiziente Weise durch thermoplastische Formgebungsverfahren hergestellt werden. So kann beispielsweise die Herstellung durch einfaches Extrudieren erfolgen. Die Verfahren sind zudem umweltschonend und ohne Gefährdung der Anwender durchführbar, da die eingesetzten Vernetzer relativ hohe Siedepunkte aufweisen und wenig flüchtig sind.

Kurzbeschreibung der Figuren:

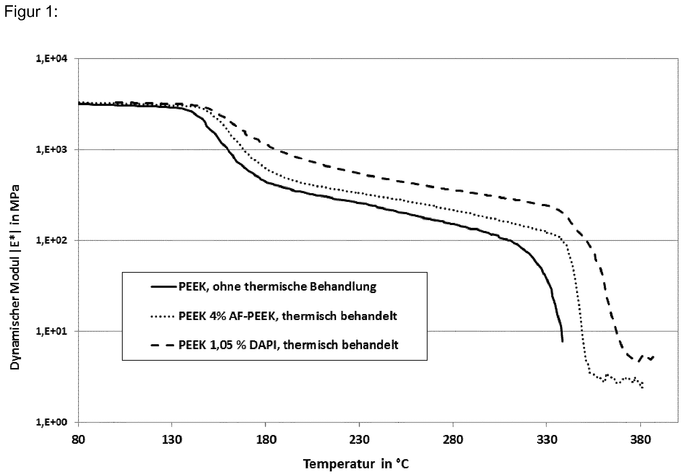

Figur 1 zeigt die Entwicklung des komplexen dynamischen Moduls mit steigender Temperatur eines erfindungsgemäßen Formkörpers (PEEK mit 1,05 % DAPI, thermisch behandelt, gestrichelte Kurve) im Vergleich zum Standard Basismaterial (PEEK ohne thermische Behandlung, durchgezogene Linie), sowie zu einem weiteren Material (PEEK, 4% AF-PEEK, thermisch behandelt, gepunktete Linie).

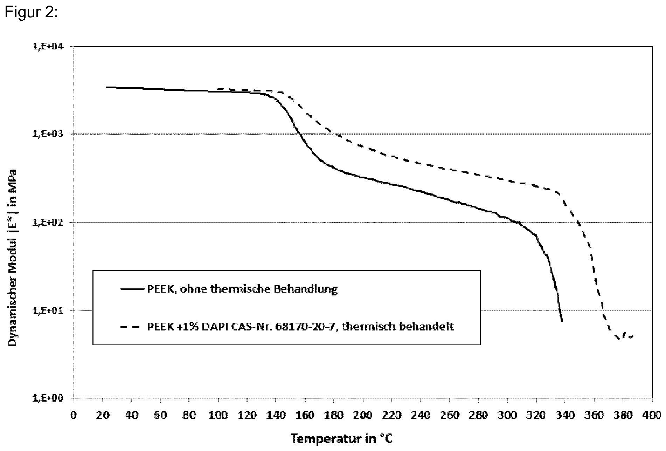

Figur 2 zeigt die Entwicklung des komplexen dynamischen Moduls mit steigender Temperatur des erfindungsgemäßen Formkörpers 4 (PEEK mit 1 % DAPI (CAS-Nr. 68170-20-7), thermisch behandelt, gestrichelte Kurve) im Vergleich zum Standard Basismaterial 1 (PEEK ohne thermische Behandlung, durchgezogene Linie).

### Ausführunasbeispiele

### Ausführungsbeispiel 1

Es werden Mischungen wie in Tabelle 1 angegeben hergestellt. Amin-funktionalisiertes PEEK (nachfolgend als "AF-PEEK" bezeichnet) wird unter Verwendung von PEEK und p-Phenylendiamin gemäß Thompson und Farris, 1988, hergestellt und nach vollständigem Auslaugen von Diphenylsulfon und unreagiertem p-Phenylendiamin zu Pulver gemahlen. Die Bestimmung des Gesamtstickstoffgehaltes nach Kjeldahl ergibt eine Umsetzungsquote von 95 % der Carbonylgruppen des PEEK. Als Vernetzer wurde DAPI (CAS Nr. 54628-89-6) in einer Reinheit von 98% eingesetzt.

**Tabelle 1: Mischungen**

| **Bsp. Nr.** | **Compound** |
|---|---|
| 1 (Vergleich) | PEEK |
| 2 (Vergleich) | PEEK, 4 Gew.-% AF-PEEK |
| 3 | PEEK, 1,05 Gew.-% DAPI |

Die Mischungen aus Tabelle 1 werden im Spritzguss zu Probekörpern verarbeitet und anschließend zur Vernetzung einer thermischen Behandlung unterzogen.

**Tabelle 2: Thermische Behandlung und Ergebnisse Zug-Dehnungsprüfung**

| **Bsp.** | **Compound** | **Thermische Behandlung** | **Streckgrenze** | **Zugfestigkeit** | **Bruchdehnung** | **Zugmodul** |
|---|---|---|---|---|---|---|
| Nr. | | | [MPa] | MPa | % | [MPa] |
| 1 | PEEK, kein Zusatz | ohne | 14,5 | 47,0 | 274 | 211 |
| 2 a | PEEK, 4% AF-PEEK | ohne | 18,5 | 41,0 | 204 | 241 |
| 2b | PEEK, 4% AF-PEEK | mit | 25,2 | 25,2 | 20,8 | 310 |
| 3 | PEEK, 1,05% DAPI | mit | 28,1 | 30,8 | 97 | 505 |

Die Zugprüfungen werden bei 240°C entsprechend der Norm DIN EN ISO527-2 durchgeführt.

Die Ergebnisse zeigen, dass die erfindungsgemäße Probe durch thermische Behandlung unschmelzbar wird und dass der Zug-E-Modul ansteigt. Dies zeigt deutlich den Vorteil der Homogenität der mit DAPI vernetzten Proben gegenüber der Inhomogenität des mittels AF-PEEK vernetzten PEEK.

### Dynamisch-mechanische Analyse (DMA)

Die dynamisch-mechanische Analyse (DMA) ist eine thermische Methode, um physikalische Eigenschaften von Kunststoffen zu bestimmen. Der Temperaturgradient (Temperatursweep) zeigt die Entwicklung des dynamischen Moduls und damit ebenfalls der Steifigkeit über den gemessenen Temperaturbereich an. Hier sind vor allem der Glasübergangsbereich (T_{g}), die Höhe des Plateaus oberhalb des T_{g}, die Lage des Abfalles des Moduls beim Aufschmelzen der kristallinen Phase, sowie die Höhe des Plateaus im Hochtemperaturbereich wichtig.

Die wurde mit thermisch behandelten Formkörpern gemäß den oben beschriebenen Ausführungsbeispielen (siehe Tabelle 1) durchgeführt. Die Temperaturgradienten wurden mit Probekörperstreifen (Breite ca. 3 mm, Dicke ca. 3 mm) bei folgenden Bedingungen gemessen: Heizrate 3 K/Min, Kontaktkraft 3N, Mitteldehnung 0,5%, Dehnungsampl. +/-0,1%. Die Ergebnisse sind in den FIG. 1 grafisch dargestellt.

Figur 1 zeigt die Entwicklung des komplexen dynamischen Moduls mit steigender Temperatur des erfindungsgemäßen Formkörpers 3 (PEEK mit 1,05 % DAPI, thermisch behandelt, gestrichelte Kurve) im Vergleich zum Standard Basismaterial 1 (PEEK ohne thermische Behandlung, durchgezogene Linie).

Als weitere Referenz ist der komplexe dynamische Modul über der Temperatur eines weiteren Materials 2b (PEEK, 4% AF-PEEK, thermisch behandelt, gepunktete Linie) dargestellt, das aus Standard-PEEK, welches durch thermische Nachbehandlung Vernetzen mit 4% AF-PEEK vernetzt wurde. Dieses AF-PEEK wurde nach der von Thompson und Farris, sowie von Yurchenko et al. beschriebenen Methode durch Modifizierung von PEEK hergestellt.

Die Ergebnisse zeigen, dass die erfindungsgemäßen vernetzten PEEK vorteilhafte thermische Eigenschaften aufweisen. Dabei werden für alle erfindungsgemäßen Formkörper Verbesserungen im Glasübergangsbereich (Tg), bei der Höhe des Plateaus oberhalb des Tg, sowie hinsichtlich des Abfalles des Moduls beim Aufschmelzen der kristallinen Phase, sowie hinsichtlich der Höhe des Plateaus im Hochtemperaturbereich erreicht. Die Glasübergangstemperatur ist ebenso erhöht wie die Steifigkeit bei hoher Temperatur, insbesondere im Bereich oberhalb von 150°C. Die Ergebnisse zeigen auch, dass insbesondere bei der Kombination von DAPI mit PEEK optimale Produkteigenschaften hinsichtlich der Höhe des Moduls und Höhe der Wärmeformbeständigkeit erzielt werden können. Die thermischen Eigenschaften können durch eine Verlängerung der thermischen Behandlung noch erheblich verbessert werden.

### Ausführungsbeispiel 2

Das DAPI-Isomerengemisch mit der CAS-Nummer 68170-20-7 (Vernetzer mit der Formel VI) wird wie im vorangegangenen Beispiel 1 mittels Zweischneckencompounder in ein kommerzielles PEEK mittlerer Viskosität eingemischt und der Strang zu einem Granulat gehäckselt.

**Tabelle 3: Mischungen**

| Bsp.-Nr. | Compound |
|---|---|
| 1 (Vergleich) | PEEK |
| 4 | PEEK + DAPI, CAS-Nr.68170-20-7, thermisch behandelt |

Die Granulate aus den Mischungen von Tabelle 3 werden im Spritzguss zu Probekörpern verarbeitet und anschließend ebenfalls einer thermischen Nachbehandlung unterzogen. Die Proben werden entsprechend dem Ausführungsbeispiel 1 mittels DMA im T-Sweep geprüft, wobei das in Figur 2 dargestellte Ergebnis erhalten wird.

Figur 2 zeigt die Entwicklung des komplexen dynamischen Moduls mit steigender Temperatur des erfindungsgemäßen Formkörpers 4 (PEEK mit 1 % DAPI (CAS-Nr. 68170-20-7), thermisch behandelt, gestrichelte Kurve) im Vergleich zum Standard Basismaterial 1 (PEEK ohne thermische Behandlung, durchgezogene Linie).

Auch hier werden die in Bezug auf Figur 1 diskutierten vorteilhaften Ergebnisse in vergleichbarer Ausprägung erhalten.

## Patentansprüche

1. Verfahren zur Herstellung eines Polyaryletherketone (PAEK) enthaltenden, vernetzten Formkörpers, umfassend die Schritte
(a) Bereitstellen einer Mischung, enthaltend ein PAEK und einen Vernetzer,
(b) Herstellen eines Formkörpers aus der Mischung, und
(c) Thermisches Behandeln des Formkörpers bei einer Temperatur, bei der PAEK vernetzt wird, wodurch der vernetzte Formkörper erhalten wird, und
wobei der Vernetzer eine Di(aminophenyl)verbindung ist, bei der die beiden Aminophenylringe über eine aliphatische Gruppe, die einen carbocyclischen Rest aufweist, miteinander verbunden sind.

2. Verfahren gemäß Anspruch 1, wobei der Vernetzer eine anellierte Verbindung ist, bei der einer der beiden Phenylringe mit dem carbocyclischen Rest anelliert ist.

3. Verfahren gemäß mindestens einem der vorhergehenden Ansprüche, wobei der Vernetzer eine 4,4'-Diaminodiphenylverbindung ist und/oder eine asymmetrische Verbindung ist.

4. Verfahren gemäß mindestens einem der vorhergehenden Ansprüche, wobei der Vernetzer eine Verbindung der allgemeinen Formel (I) ist: 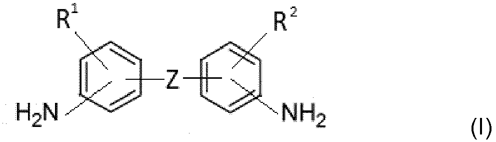 wobei R¹ und R² unabhängig voneinander ausgewählt sind aus H, substituiertem oder unsubstituiertem Alkyl mit 1 bis 20 C-Atomen, insbesondere mit 1 bis 4 C-Atomen, insbesondere Methyl oder Ethyl, substituiertem oder unsubstituiertem Aryl mit 5 bis 12 C-Atomen, F und Cl, und wobei Z die aliphatische Gruppe ist, die einen carbocyclischen Rest aufweist.

5. Verfahren gemäß Anspruch 4, wobei der Vernetzer eine Verbindung der allgemeinen Formel (II) ist: 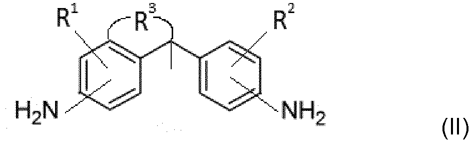 wobei R¹ und R² unabhängig voneinander ausgewählt sind aus H, substituiertem oder unsubstituiertem Alkyl mit 1 bis 20 C-Atomen, insbesondere mit 1 bis 4 C-Atomen, insbesondere Methyl oder Ethyl, substituiertem oder unsubstituiertem Aryl mit 5 bis 12 C-Atomen, F und Cl, und
wobei R³ ein carbocyclischer Rest ist, der 2 bis 3 C-Ringatome aufweist, und der mit mindestens einer Alkylgruppe mit 1 bis 4 C-Atomen, insbesondere Methyl oder Ethyl, substituiert sein kann.

6. Verfahren gemäß Anspruch 5, wobei der Vernetzer eine Verbindung der Formel (IV) ist:

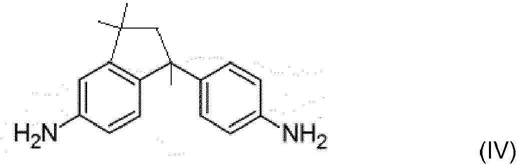

7. Verfahren gemäß mindestens einem der vorhergehenden Ansprüche, wobei das Polyaryletherketon (PAEK) ein Polyetheretherketon (PEEK) ist.

8. Verfahren gemäß mindestens einem der vorhergehenden Ansprüche, wobei das Polyaryletherketon (PAEK) bei 380°C eine Schmelzviskosität im Bereich von 5 cm³/10 min bis 250 cm³/10 min aufweist, gemessen nach DIN ISO 1130.

9. Verfahren gemäß mindestens einem der vorhergehenden Ansprüche, wobei die Mischung kein Lösungsmittel enthält.

10. Verfahren gemäß mindestens einem der vorhergehenden Ansprüche, wobei die Temperatur in Schritt (b) mindestens 300°C ist.

11. Verfahren gemäß mindestens einem der vorhergehenden Ansprüche, wobei die Mischung in Schritt (b) durch Extrudieren, Heißpressen und/oder Spritzgießen verarbeitet wird.

12. Verfahren gemäß Anspruch 11, wobei der in Schritt (b) erhaltene Formkörper in Schritt (c) für mindestens 6 h einer thermischen Behandlung unterzogen wird.

13. Verfahren gemäß Anspruch 12, wobei die thermische Behandlung in Schritt (c) bei einer Temperatur von mindestens 250°C erfolgt.

14. Formkörper auf Basis von Polyaryletherketonen (PAEK), der eine vernetzte Matrix aus PAEK aufweist,
wobei das PAEK mit einem Linker L vernetzt ist, der ein Diphenylrest ist, bei dem die beiden Phenylringe über eine aliphatische Gruppe, die einen carbocyclischen Rest aufweist, miteinander verbunden sind,
wobei das PAEK über Iminbindungen mit den Phenylringen des Linkers verbunden ist, wobei der Formkörper insbesondere durch ein Verfahren gemäß mindestens einem der Ansprüche 1 bis 13 erhältlich ist.

15. Dichtungsartikel, Anlaufscheiben, Back-up-Ringe, Ventile, Konnektoren, Isolatoren, Schnapphaken, Lager, Buchsen, Dicht- und O-Ringe, Rohre und Leitungen, Kabel, Umhüllungen und Ummantelungen, Gehäuse einer elektrischen oder chemischen Anwendung, bestehend aus oder enthaltend einen Formkörper gemäß Anspruch 14.

## Claims

1. Process for the production of a crosslinked moulding comprising polyaryletherketones (PAEK), comprising the steps of:
(a) provision of a mixture comprising a PAEK and a crosslinking agent,
(b) production of a moulding made of the mixture, and
(c) thermal treatment of the moulding at a temperature at which PAEK is crosslinked, with resultant production of the crosslinked moulding, and
where the crosslinking agent is a di(aminophenyl) compound in which the two aminophenyl rings have bonding to one another by way of an aliphatic group comprising a carbocyclic moiety.

2. Process according to Claim 1, where the crosslinking agent is an annellated compound in which one of the two phenyl rings has been annellated with the carbocyclic moiety.

3. Process according to at least one of the preceding claims, where the crosslinking agent is a 4,4'-diaminodiphenyl compound and/or is an asymmetric compound.

4. Process according to at least one of the preceding claims, where the crosslinking agent is a compound of the general formula (I): 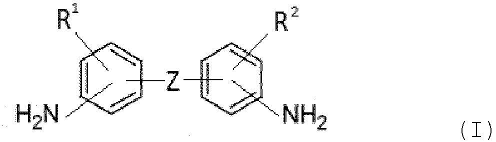 where R¹ and R² are selected mutually independently from H, substituted or unsubstituted alkyl having from 1 to 20 carbon atoms, in particular having from 1 to 4 carbon atoms, in particular methyl or ethyl, substituted or unsubstituted aryl having from 5 to 12 carbon atoms, F and Cl, and where Z is the aliphatic group comprising a carbocyclic moiety.

5. Process according to Claim 4, where the crosslinking agent is a compound of the general formula (II): 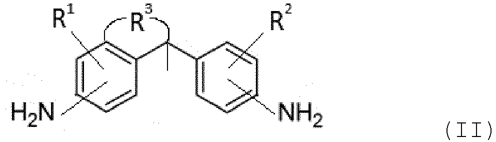 where R¹ and R² are selected mutually independently from H, substituted or unsubstituted alkyl having from 1 to 20 C atoms, in particular having from 1 to 4 C atoms, in particular methyl or ethyl, substituted or unsubstituted aryl having from 5 to 12 C atoms, F and Cl, and
where R³ is a carbocyclic moiety which comprises from 2 to 3 ring carbon atoms and which can have substitution by at least one alkyl group having from 1 to 4 carbon atoms, in particular methyl or ethyl.

6. Process according to Claim 5, where the crosslinking agent is a compound of the formula (IV):

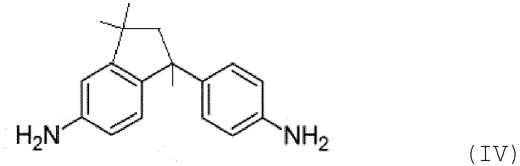

7. Process according to at least one of the preceding claims, where the polyaryletherketone (PAEK) is a polyetheretherketone (PEEK).

8. Process according to at least one of the preceding claims, where the melt viscosity of the polyaryletherketone (PAEK) at 380°C is in the range from 5 cm³/10 min to 250 cm³/10 min, measured in accordance with DIN ISO 1130.

9. Process according to at least one of the preceding claims, where the mixture comprises no solvent.

10. Process according to at least one of the preceding claims, where the temperature in step (b) is at least 300°C.

11. Process according to at least one of the preceding claims, where the mixture is processed in step (b) via extrusion, compression moulding and/or injection moulding.

12. Process according to Claim 11, where the moulding obtained in step (b) is subjected in step (c) to a thermal treatment for at least 6 h.

13. Process according to Claim 12, where the thermal treatment in step (c) takes place at a temperature of at least 250°C.

14. Moulding based on polyaryletherketones (PAEK) which comprises a crosslinked matrix made of PAEK,
where the PAEK has been crosslinked with a linker L that is a diphenyl moiety in which the two phenyl rings have bonding to one another by way of an aliphatic group comprising a carbocyclic moiety,
where the PAEK has bonding by way of imine bonds to the phenyl rings of the linker,
where the moulding in particular is obtainable via a process according to at least one of Claims 1 to 13.

15. Sealing items, thrust washers, back-up rings, valves, connectors, insulators, snap hooks, bearings, bushes, sealing rings and O-rings, tubes and conduits, cables, sheaths and jackets, and housings for electrical or chemical use, consisting of or comprising a moulding according to Claim 14.

## Revendications

1. Procédé pour la production d'un corps moulé réticulé, contenant des polyaryléthercétones (PAEK), comprenant les étapes
(a) préparation d'un mélange contenant une PAEK et un réticulant,
(b) production d'un corps moulé à partir du mélange et
(c) traitement thermique du corps moulé à une température à laquelle la PAEK est réticulée, suite à quoi le corps moulé réticulé est obtenu et
le réticulant étant un composé di(aminophényle) dans lequel les deux cycles aminophényle sont reliés l'un à l'autre par l'intermédiaire d'un groupe aliphatique qui présente un radical carbocyclique.

2. Procédé selon la revendication 1, le réticulant étant un composé annelé dans lequel l'un des deux cycles phényle est annelé au radical carbocyclique.

3. Procédé selon au moins l'une quelconque des revendications précédentes, le réticulant étant un composé 4,4'-diaminodiphényle et/ou un composé asymétrique.

4. Procédé selon au moins l'une quelconque des revendications précédentes, le réticulant étant un composé de formule générale (I) : 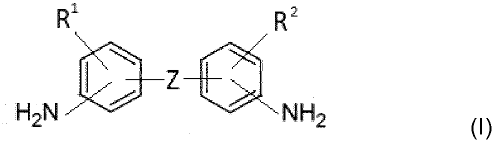 dans laquelle R¹ et R² sont choisis, indépendamment l'un de l'autre, parmi H, alkyle substitué ou non substitué comprenant 1 à 20 atomes de carbone, en particulier 1 à 4 atomes de carbone, en particulier méthyle ou éthyle, aryle substitué ou non substitué comprenant 5 à 12 atomes de carbone, F et Cl et Z étant le groupe aliphatique qui présente un radical carbocyclique.

5. Procédé selon la revendication 4, le réticulant étant un composé de formule générale (II) : 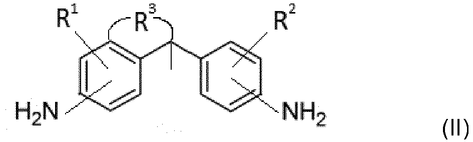 dans laquelle R¹ et R² sont choisis, indépendamment l'un de l'autre, parmi H, alkyle substitué ou non substitué comprenant 1 à 20 atomes de carbone, en particulier 1 à 4 atomes de carbone, en particulier méthyle ou éthyle, aryle substitué ou non substitué comprenant 5 à 12 atomes de carbone, F et Cl et R³ étant un radical carbocyclique qui présente 2 à 3 atomes de carbone de cycle et qui peut être substitué par au moins un groupe alkyle comprenant 1 à 4 atomes de carbone, en particulier méthyle ou éthyle.

6. Procédé selon la revendication 5, le réticulant étant un composé de formule générale (IV) :

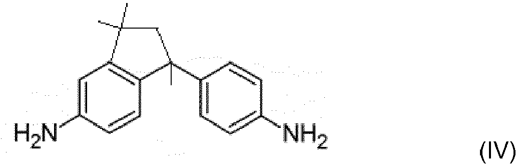

7. Procédé selon au moins l'une quelconque des revendications précédentes, la polyaryléthercétone (PAEK) étant une polyétheréthercétone (PEEK).

8. Procédé selon au moins l'une quelconque des revendications précédentes, la polyaryléthercétone (PAEK) présentant, à 380°C, une viscosité en masse fondue dans la plage de 5 cm³/10 min à 250 cm³/10 min, mesurée selon la norme DIN ISO 1130.

9. Procédé selon au moins l'une quelconque des revendications précédentes, le mélange ne contenant pas de solvant.

10. Procédé selon au moins l'une quelconque des revendications précédentes, la température dans l'étape (b) étant d'au moins 300°C.

11. Procédé selon au moins l'une quelconque des revendications précédentes, le mélange dans l'étape (b) étant mis en œuvre par extrusion, pressage à chaud et/ou moulage par injection.

12. Procédé selon la revendication 11, le corps moulé obtenu dans l'étape (b) étant soumis dans l'étape (c) pendant au moins 6 heures à un traitement thermique.

13. Procédé selon la revendication 12, le traitement thermique dans l'étape (c) ayant lieu à une température d'au moins 250°C.

14. Corps moulé à base de polyaryléthercétones (PAEK), qui présente une matrice réticulée en PAEK, la PAEK étant réticulée par un lieur L, qui est un radical diphényle dans lequel les deux cycles phényle sont reliés l'un à l'autre par l'intermédiaire d'un groupe aliphatique qui présente un radical carbocyclique, la PAEK étant liée par l'intermédiaire de liaisons imine aux cycles phényle du lieur, le corps moulé étant obtenu en particulier par un procédé selon au moins l'une quelconque des revendications 1 à 13.

15. Articles d'étanchéité, paliers axiaux, bagues d'appoint, soupapes, connecteurs, isolateurs, mousquetons, paliers, douilles, joints d'étanchéité et joints annulaires, tuyaux et conduites, câbles, gaines et enveloppes, boîtiers d'une application électrique ou chimique, constitués par ou contenant un corps moulé selon la revendication 14.
